# EUROPEAN PATENT APPLICATION

(11) **EP 2 808 731 A2**
(43) Date of publication of application: **03.12.2014**
(21) Application number: 13199835.3
(22) Date of filing: 30.12.2013
(51) Int. Cl.: G02F 1/13363, G02F 1/1333

(54) **Display device comprising protective films**

(30) Priority: 21.05.2013 KR 20130057251
(71) Applicant: Samsung Display Co., Ltd., Yongin-City, Gyeonggi-Do, 446-711 (KR)
(72) Inventor: Jeong, Chul-Woo, Gyeonggi-Do (KR); Park, Soon-Ryong, Gyeonggi-Do (KR); Baek, Seok-Gi, Gyeonggi-Do (KR); So, Jung-Ho, Gyeonggi-Do (KR); Kim, Tae-Eun, Gyeonggi-Do (KR)
(74) Representative: Walaski, Jan Filip

(57) **Abstract**

In an aspect, a display device (1) including a display panel (10), a first protecting film (21) attached under the display panel, and a second protecting film (22) attached on the display panel on the side opposite to the first protecting film (21), in which at least any one of the first and second protecting films includes a retardation layer is provided. The display device may further comprise a touch panel (50).

## Description

The present invention relates to a display device having a display panel, and particularly but not exclusively, to a display device which consists of a polarizing plate, a touch panel and a window, which are stacked above a display panel.

When a polyimide (PI) layer is included in the display panel with a relatively thin thickness of about 20∼50 µm, it is vulnerable to physical impact and prone to curling.

Accordingly, a protecting film may be disposed on the PI layer. However, when a polyethylene terephthalate (PET) film is used as the protecting film there is a problem in that the mechanical strength thereof is very weak during bending.

The PET film needs to be formed very thickly in order to improve physical reliability thereof.

However, when the PET film is formed very thickly, the PET film does not bend well and the mechanical strength thereof is not vey good, which may cause many faults in the display panel.

The present disclosure describes a display device having advantages of having a simplified structure and minimizing stress and/or strain applied at the time of bending, by using a protecting film having a thin thickness, superior mechanical strength, and no distortion in optical characteristics.

Some embodiments provide a display device, including a display panel, a first protecting film, and a second protecting film. The first protecting film may be attached under the display panel, and the second protecting film may be attached on the display panel. Here, the second protecting film, or both the first and second protecting films, includes a retardation layer.

In some embodiments, the display panel may have flexibility.

In some embodiments, the retardation layer may consist of one or more of triacetyl cellulose (TAC), cycloolefin polymer (COP), polymethyl methacrylate (PMMA), polycarbonate (PC), and polyethylene terephthalate (PET) in a single layer or multilayer.

In some embodiments, at least one of the first and second protecting films may have a thickness of 20 to 120 µm.

In some embodiments, the display device may further include a touch panel formed on the second protecting film, a polarizing layer formed on the touch panel, and a window formed on the polarizing layer.

In some embodiments, the second protecting film and the touch panel may have an air gap therebetween.

In some embodiments, an edge of an upper portion of the second protecting film and an edge of a lower portion of the touch panel may be bonded to each other by a tape.

In some embodiments, the display device can have a simplified structure and minimize stress applied at the time of bending by using a protecting film having a thin thickness, superior mechanical strength, and no distortion in optical characteristics.

Embodiments of the invention will now be described by way of example with reference to the accompanying drawings, in which:
FIG. 1 is a cross-sectional view of a display device according to an embodiment;
FIG. 2 is a cross-sectional view of a display device according to another embodiment; and
FIG. 3 to FIG. 9 are cross-sectional views showing first to sixth examples of a protecting film of each of the display devices shown in FIG. 1 and FIG. 2.

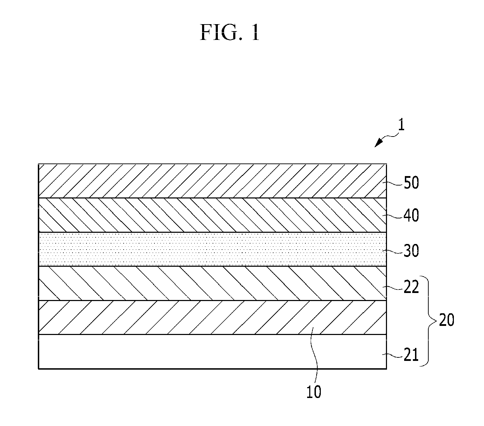

FIG. 1 is a cross-sectional view of a display device according to an embodiment.

Referring to FIG. 1, a display device according to an embodiment may include a display panel 10, a protecting film 20, a touch panel 30, a polarizing layer 40, and a window 50, said protecting film 20 including a first protecting film 21 and a second protecting film 22.

In some embodiments, the display panel 10, although not shown in the drawing, may include a substrate, light emitting elements formed on the substrate, and a thin film encapsulation layer covering the light emitting elements.

The display panel 10 has a display side which is the side on which images are displayed - i.e. the side from which light is emitted. In other words, it is the surface which faces the viewer when the image on the display panel is being viewed by the viewer. The display panel may emit light from both sides, in which case the display panel can be considered to have first and second display sides on opposite surfaces.

In some embodiments, the substrate may be formed of a polyimide (PI) layer, as a transparent material, and the display panel 10 may have flexibility.

As shown in FIG. 1, the first protecting film 21 is attached on a lower portion of the display panel 10, and the second protecting film 22 is attached on an upper portion of the display panel 10, that is, on the foregoing thin film encapsulation layer (not shown).

In some embodiments, the first and second protecting films 21 and 22 may serve to protect the display panel 10 in the process of manufacturing the display device 1.

In some embodiments, the second protecting film includes the retardation layer. In other embodiments, both the first and the second protecting films include the retardation layer. Having the same protecting film including a retardation material on both sides of the display panel simplifies the manufacturing process and avoids having to apply two different types of protective films on the display panel. In addition, the first protecting film can have a retardation function where the display panel emits light from the lower portion.

In some embodiments, a material having a retardation function, alone or in a multilayer, is included in the protecting film 20, so that the protecting film 20 is capable of performing both a protection function and a retardation function.

Examples of the material having a retardation function may include triacetyl cellulose (TAC), cycloolefin polymer (COP), polymethyl methacrylate (PMMA), polycarbonate (PC), polyethylene terephthalate (PET), and the like.

Here, polyethylene terephthalate (PET) is relatively difficult to use as a sole component due to photo-elasticity thereof, and thus it may be used together with another material having the foregoing retardation function in a multilayer.

In some embodiments, the retardation layer may be included in only the second protecting film 22 located on the upper portion of the display panel 10, may be included in only the first protecting film 21 located on the lower portion of the display panel 10, or may be included in both the first and second protecting films 21 and 22 located on the lower and upper portions of the display panel 10. Where the display panel provides emission from opposite surface, both the first and second protecting films can provide a retardation function.

In some embodiments, the protecting film 20 including the retardation layer as described above may be formed by an extruding process without a stretching process.

In some embodiments, the first and second protecting films may be formed to have a thin thickness of, for example, about 20 to 120 µm.

In an embodiment, as shown in FIG. 1, the touch panel 30 for touch sensing may be formed on the second protecting film 22.

In some embodiments, the touch panel 30, although not shown in the drawing, may be a resistive type touch panel or a capacitive type touch panel.

In some embodiments, the resistive type touch panel may consist of upper and lower plates coated with a conductive material capable of receiving a signal by a pressure.

Further, as for the resistive type touch panel, a film having transparent electrodes is formed on a display module and a voltage is applied to each edge or corner of the film to generate a uniform electric field, so that, when any one point is touched through an input unit such as a pen or a finger, a voltage drop occurs and thus a position coordinate may be found.

In some aspects, as shown in FIG. 1, the polarizing plate 40 may be formed on the touch panel 30.

In some embodiments, the polarizing plate 40 may include a polarizer layer and upper and lower supporters supporting the polarizer layer (not shown in FIG. 1).

In some embodiments, the polarizer layer may be formed of polyvinyl alcohol (PVA), and the upper and lower supporters may be formed of triactyl cellulose (TAC).

Typically, a retardation layer is included in the lower portion of the polarizing layer and thus the polarizing layer may perform both a polarization function and a retardation function. However, in the present embodiments, the retardation layer is separated from the polarizing layer and thus applied to the first protecting film 21, the second protecting film 22, or both the first and second protecting films 21 and 22, respectively.

In some embodiments, the first protecting film 21, the second protecting film 22 or the first and second protecting films 21 and 22 may perform both a function as a protecting film and the retardation function.

In an aspect, as shown in FIG. 1, the window 50 may be formed on the polarizing layer 40.

In some embodiments, the window 50, which serves to protect the display panel 30, may be formed of a transparent material such as glass, acryl, or the like.

As for an upper structure of the display device according to an embodiment, FIG. 1 shows the window 50, the polarizing layer 40, and the touch panel 30, which are stacked in the shown order. However, this order may be partially changed. For example, the window 50, the touch panel 30, and the polarizing layer 40 may be stacked as recited herein.

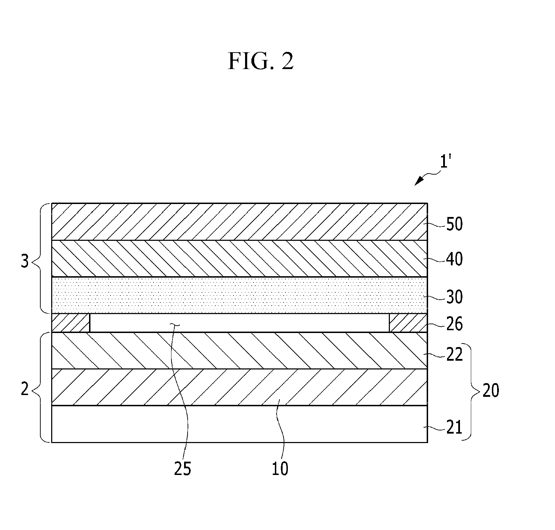

FIG. 2 is a cross-sectional view of a display device 1' according to another embodiment.

Referring to FIG. 2, the display device 1' according to another embodiment may include a display panel 10, a first protecting film 21, a second protecting film 22, a touch panel 30, a polarizing layer 40, and a window 50. The second protecting film 22 and the touch panel 30 may be spaced apart from each other at a predetermined distance. Here, in describing the display device according to the embodiment shown in FIG. 2, each component that is the same as that of the embodiment shown in FIG. 2 is designated by the same numeral, and descriptions of the component having the same numeral is omitted.

In some embodiments, as shown in FIG. 2, the edge of an upper portion of the second protecting film 22 and the edge of a lower portion of the touch panel 30 may be bonded by a bonding tape 26, to thereby form an air gap 25 between the second protecting film 22 and the touch panel 30.

This structure has an advantage in that an upper structure body and a lower structure body are separately manufactured, and then later coupled with each other centering on the air gap 25.

In some embodiments, a retardation layer may be included in the first protecting film 21, the second protecting film 22 or both the first and second protecting films 21 and 22, thereby solving the problem that a refractive index of air is different from a refractive index of the protecting film.

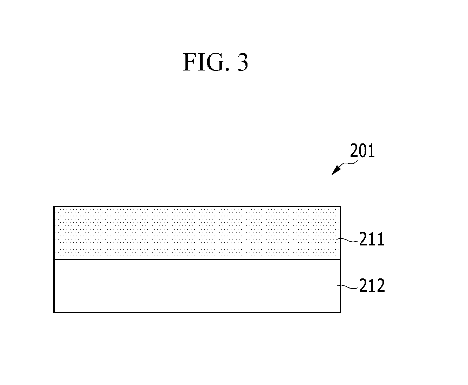

FIG. 3 to FIG. 9 are cross-sectional views showing first to sixth examples of the protecting film 20 of each of the display devices 1 and 1' shown in FIG. 1 and FIG. 2.

As described above, each of the examples of the protecting film 20 may be applied to only the second protecting film 22, or both the first and second protecting films 21 and 22.

In a first example, the protecting film of each of the display devices 1 and 1' shown in FIG. 1 and FIG. 2, shown in FIG. 3 as protecting film 201, may consist of layer 211 consisting of cycloolefin polymer (COP) and polymethyl methacrylate layer 212 consisting of polymethyl methacrylate (PMMA) in the order shown.

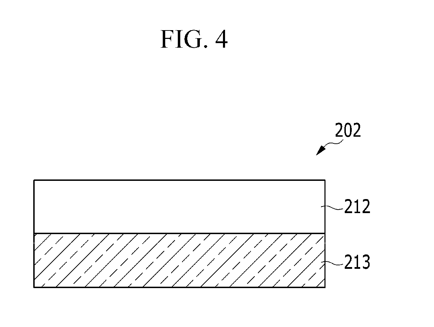

In a second example, the protecting film of each of the display devices 1 and 1' shown in FIG. 1 and FIG. 2, shown in FIG. 4 as protecting film 202, may consist of layer 212 consisting of polymethyl methacrylate (PMMA) and layer 213 consisting of polycarbonate in the shown order.

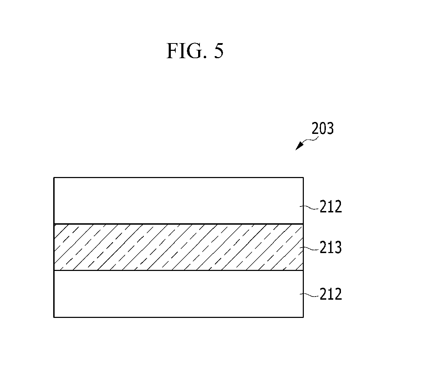

In a third example, the protecting film of each of the display devices 1 and 1' shown in FIG. 1 and FIG. 2, shown in FIG. 5 as protecting film 203, may consist of layer 212 consisting of polymethyl methacrylate (PMMA), layer 213 consisting of polycarbonate (PC), and layer 212 consisting of polymethyl methacrylate (PMMA) in the shown order.

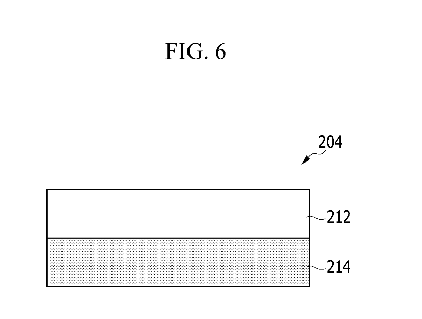

In a fourth example, the protecting film of each of the display devices 1 and 1' shown in FIG. 1 and FIG. 2, shown in FIG. 6 as protecting film 204, may consist of layer 212 consisting of polymethyl methacrylate (PMMA) and layer 214 consisting of injection molded-polymethyl methacrylate in the shown order.

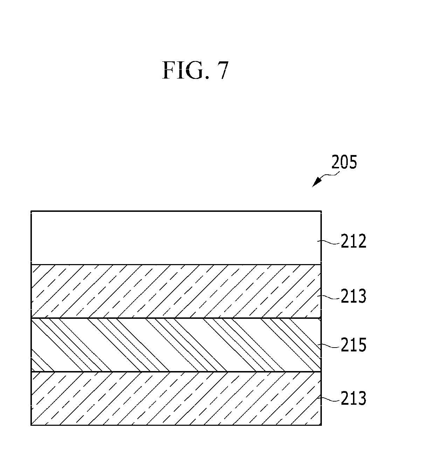

In a fifth example, the protecting film of each of the display devices 1 and 1' shown in FIG. 1 and FIG. 2, shown in FIG. 7 as protecting film 205, may consist of layer 212 consisting of polymethyl methacrylate (PMMA), layer 213 consisting of polycarbonate (PC), layer 215 consisting of polyethylene terephthalate (PET), and layer 213 consisting of polycarbonate (PC) in the shown order.

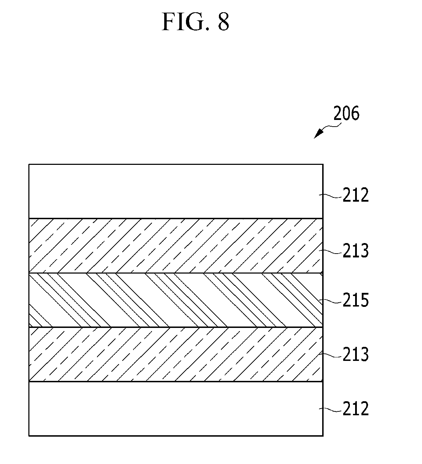

In a sixth example, the protecting film of each of the display devices 1 and 1' shown in FIG. 1 and FIG. 2, shown in FIG. 8 as protecting film 206, may consist of layer 212 consisting of polymethyl methacrylate (PMMA), layer 213 consisting of polycarbonate (PC), layer 215 consisting of polyethylene terephthalate (PET), layer 213 consisting of polycarbonate (PC), and layer 212 consisting of polymethyl methacrylate (PMMA) in the shown order.

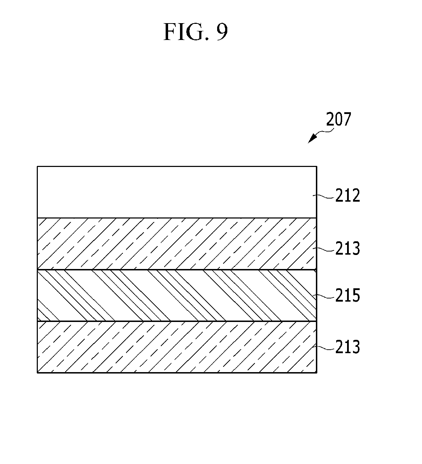

In a seventh example, the protecting film of each of the display devices 1 and 1' shown in FIG. 1 and FIG. 2, shown in FIG. 9 as protecting film 207, may consist of layer 212 consisting of polymethyl methacrylate (PMMA), layer 213 consisting of polycarbonate (PC), layer 215 polyethylene terephthalate (PET), and layer 213 consisting of polycarbonate (PC) in the shown order.

Besides the foregoing embodiments, the design thereof may be changed to have a material having a retardation function, alone or in a multilayer, so that the stress applied at the time of bending can be minimized.

Particularly, the protecting film formed in a multilayer can obtain superior mechanical strength.

Also, a conventional display panel may be protected by a protective film on one side only, and the polarization layer and the touch panel may be stacked directly on the side of the display panel without the protective film. In contrast, in embodiments of the present invention, the protective film is kept on both sides of the display panel during and after the manufacturing process. As a result, the protection is maintained on both sides permanently, and there is no need to remove the protective film on one (upper) side of the display panel as in the conventional manufacturing process.

According to the present invention, a display device having a simple structure and minimizing stress applied at the time of bending can be provided by using the protecting film having a thin thickness, superior mechanical strength, and no distortion in optical characteristics.

While this disclosure has been described in connection with what is presently considered to be practical exemplary embodiments, it is to be understood that the invention is not limited to the disclosed embodiments and is intended to cover various modifications and equivalent arrangements included within the scope of the appended claims.

## Claims

1. A display device comprising:
a display panel having a display side;
a first protecting film on a side of the display panel opposite the display side; and
a second protecting film on the display side of the display panel,
wherein the second protecting film comprises a retardation layer.

2. The display device of claim 1, wherein the first protecting film comprises a retardation layer.

3. The display device of claim 1 or 2, wherein the display panel is flexible.

4. The display device of any one of claims 1, 2 or 3, wherein the retardation layer comprises one or more layers of triacetyl cellulose TAC, cycloolefin polymer COP, polymethyl methacrylate PMMA, polycarbonate PC, or polyethylene terephthalate PET.

5. The display device of any one of the preceding claims, wherein at least one of the first and second protecting films has a thickness of 20 to 120 µm.

6. A display device comprising:
a display panel having a display side;
a first protecting film on a side of the display panel opposite the display side; and
a second protecting film on the display side of the display panel,
wherein the first protecting film comprises a retardation layer.

7. The display device of claim 6, wherein the display panel is flexible.

8. The display device of any one of claims 6, or 7, wherein the retardation layer comprises one or more layers of triacetyl cellulose TAC, cycloolefin polymer COP, polymethyl methacrylate PMMA, polycarbonate PC, or polyethylene terephthalate PET.

9. The display device of any one of the preceding claims, further comprising:
a touch panel on the second protecting film;
a polarizing layer on the touch panel; and
a window on the polarizing layer.

10. The display device of claim 9, wherein the second protecting film and the touch panel have an air gap therebetween.

11. The display device of claim 10, wherein an edge of an upper portion of the second protecting film and an edge of a lower portion of the touch panel are bonded to each other by a tape.

12. A method of manufacturing a display device, comprising:
applying first and second protecting films on opposite sides of a display panel;
wherein the film on the display side of the display panel comprises a retardation layer.

13. The method of claim 12, wherein both the first and second protecting films comprise a retardation layer.

14. The method of claim 12 or 13, wherein the second protecting film is on the display side of the display panel, the method further comprising:
forming a touch panel on the second protecting film;
forming a polarizing layer on the touch panel; and
forming a window on the polarizing layer.
